Europäisches Patentamt

(19) European Patent Office

Office européen des brevets

(11) Publication number: **0 231 646 B1**

(12) **EUROPEAN PATENT SPECIFICATION**

(45) Date of publication of patent specification: **20.02.91** (51) Int. Cl.⁵: **H04N 1/10, B43L 1/00**

(21) Application number: **86310052.5**

(22) Date of filing: **23.12.86**

(54) Electronic print board apparatus.

(30) Priority: **27.12.85 JP 293052/85**
**27.12.85 JP 293053/85**

(43) Date of publication of application:
**12.08.87 Bulletin 87/33**

(45) Publication of the grant of the patent:
**20.02.91 Bulletin 91/08**

(84) Designated Contracting States:
**DE FR GB**

(56) References cited:
**EP-A- 0 119 856       FR-A- 1 554 718**
**US-A- 2 354 199       US-A- 3 109 059**
**US-A- 3 541 248       US-A- 4 275 423**

**PATENT ABSTRACTS OF JAPAN, vol. 9, no.**
**118 (E-316)(1841), May 23, 1985 & JP-**
**A-60-7262**

(73) Proprietor: **Oki Electric Industry Company,**
**Limited**
**7-12, Toranomon 1-chome Minato-ku**
**Tokyo 105(JP)**

(72) Inventor: **Isobe, Minoru Oki Electric Industry**
**Co. Ltd.**
**7-12, Toranomon 1-chome Minato-ku**
**Tokyo(JP)**

(74) Representative: **Boydell, John Christopher et**
**al**
**Stevens, Hewlett & Perkins 5 Quality Court**
**Chancery Lane**
**London, WC2A 1HZ(GB)**

## Description

The present invention relates to an electronic print board apparatus capable of printing characters and figures etc., written on a blackboard for use in conferences and meetings, etc., and more particularly to an electronic print board apparatus incorporating a scanner moving system for scanning the characters and the figures, etc., in order to read them by permitting a read sensor to move with respect to the writing surface.

A prior electronic print board is employed in conferences, explanation meetings, and preliminary meetings, etc., and is capable of scaling down characters, figures, etc., written on a blackboard, printing them, and distributing them to attendants on the spot. This is disclosed by the present applicant in USP No. US-A-4,587,568, US-A-4,670,794, US-A-4,667,254, US-A-4,727,431, and US-A-4,672,682.

The electronic print board described above includes a writing surface on which a writer writes characters and figures, etc., an elongate lamp for illuminating the writing surface, a sensor for converting reflected light from the writing surface into an electric signal and scanning a pattern on a line of the writing surface, means for effecting this one line scanning by the sensor over the whole writing surface, and a printer for scaling down characters and figures, etc., written on the writing surface and printing them in conformity with the electric signal provided from the sensor.

In addition, for the means for scanning the whole writing surface, two systems can be employed: one a sheet moving system and the other a scanner moving system.

In the sheet moving system, the writing surface is formed by a continuous sheet which sheet is wound around a rotatable roller and thereby supported. The sheet is moved by rotating the roller and is scanned by the fixed sensor.

In the scanner moving system, the writing surface is formed with a board, and a lamp and a sensor are mounted on a carrier movable along the board surface, which carrier is then moved and scanned.

However, such prior electronic print boards suffer from the following problems:-

(a) the sheet moving system, which requires a motor for rotating and driving a roller, a control unit for controlling the motor, and a power source, makes the apparatus heavy, large-sized, complicated and costly, and hence it cannot meet the requirements of small-size, lightweight, and low price, which is an object of a wall-mounting type of electronic print board.

(b) the scanner moving system, which employs a motor as power to drive a scanning part such as the carrier, causes a mechanism for driving the scanning part to be large-sized and complicated. In addition, attended with these difficulties, an electric control system is also complicated while a power source unit serving to supply power thereto is also large-sized. As a result, the electronic print board apparatus is inevitably made large-scale and hence cannot be small-sized, light in weight and low priced.

(c) the scanner moving system is adapted to have a writing surface formed with a sheet of board, and so cannot have a plurality of writing surfaces.

(d) an operating unit a printing part, and many constituent elements included in the electric control system are housed in a casing located on the back or the side of the writing surface or suspended therefrom. Accordingly, the electronic print board becomes thick as a whole and large-sized, and thus unsuitable as a wall-mounting system.

(e) The scanning unit, the electric control system housed in the casing, and an external power source are connected with each other via cables. Accordingly, the appearance of the apparatus as a wall-mounting system is spoiled by drawing around the cables.

In view of the drawbacks of the prior techniques, it is an object of the present invention to provide an electronic print board which is small-sized, light in weight, low-priced, and reduced in power consumption.

Another object of the present invention is to provide an electronic print board capable of being mounted on a wall or being buried therein for thereby greatly increasing the degree of freedom of installation conditions.

Still another object of the present invention is to provide an electronic print board apparatus wherein cables for power supply from the outside of the electronic print board and signal delivery between it and a printing unit are eliminated for improving the appearance of the apparatus.

Yet still another object of the present invention is to provide an electronic print board apparatus capable of being employed as a mere blackboard unit by removing a scanning unit from the electronic print board, said blackboard unit being capable of preservation for a long period of time while precluding the possibility of heat generation and the production of fire.

A still further object of the present invention is to provide an electronic board apparatus including a plurality of writing surfaces and being capable of manually selecting a desired writing surface with ease.

According to the invention, there is provided an electronic print board apparatus comprising:

(a) a writing part having a plurality of writable/erasable writing surfaces;

(b) a frame part for housing and supporting said writing part;

(c) a scanning part supported movably on said frame part for optically scanning an exposed one of said writing surfaces in a prescribed direction and for thereby generating an electric signal representative of read information;

(d) a printing part for printing the read information onto a recording medium in conformity with said electric signal;

(e) said writing part being arranged by stacking writable flat plates respectively into two sections yielded by halving the interior of said frame part;

(f) said plurality of writing surfaces being composed of a plurality of writable flat plates in the form of a stack constrained to move from one said section to the other;

(g) said plurality of flat plates being rotatable, when respectively located at the front positions of said sections, around a boundary line dividing said two sections to thereby move from one section to the other of said two sections; and

(h) said exposed writing surfaces being constituted by the exposed surfaces of a respective pair of said flat plates each one of which being located at the front position of a respective one of said sections.

Said writing part is constructed by stacking a plurality of writable flat sheets from this side to the interior thereof in two sections yielded by halving the interior of the frame, said writing surface being formed by two flat sheets positioned on the front row of the two sections among the plurality of flat sheets, the plurality of flat sheets being adapted to be movable from one to the other of the two sections by rotating around a boundary line dividing the interior of the frame part into the two sections when the flat sheets are respectively located on the front row, said scanning unit including an operating part to provide prescribed instruction, drive means for moving the scanning part to move in the prescribed direction on the writing surface, a read part composed of a light source for illuminating the writing surface with light and of a sensor for converting reflected light from the writing surface to an electric signal, means for synchronizing the scanning of the writing surface by the read part with a moving speed of the scanning part, a battery for supplying power to respective constituent parts within the scanning part, and means for transmitting the information read by the read part with radio, the printing part including means for receiving the information transmitted from the scanning part.

In order that the invention may be better understood, an embodiment thereof will now be described by way of example only and with reference to the accompanying drawings in which:-

Figure 1 is a general view illustrating an embodiment of an electronic print board according to the present invention;

Figure 2 is a view illustrating changeover operation for a writing surface shown in Figure 1;

Figure 3 is a view illustrating the movement of a scanning unit shown in Figure 1;

Figure 4 is a view illustrating the scanning unit of Figure 1 when demounted;

Figures 5(a) to 5(g) are respectively views illustrating the arrangement of a writing part having the writing surface capable of changeover shown in Figure 1;

Figures 6(a) and 6(f) are views illustrating the arrangement of the scanning unit shown in Figure 1; and

Figures 7(a) and 7(b) are block diagrams each illustrating the electric control system in the embodiment of the electronic print board apparatus of the present invention.

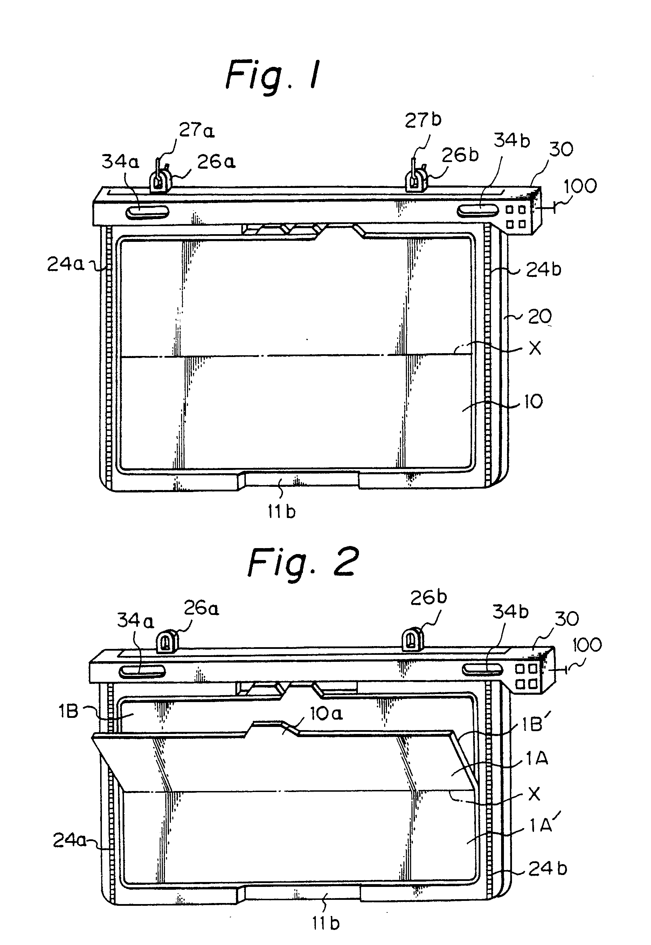

Referring to Figure 1, the whole arrangement of an electronic print board apparatus according to the present invention essentially consists of a multi-layer folding type writing part 10 (hereinafter simply referred to as a writing part), a frame 20, a scanning unit (scanner) 30, and a monitor printer described later. Describing the outlines of these constituent elements, the writing part 10 is housed in the rectangular frame 20 (these elements constitute a blackboard unit), and the scanning unit 30 is mounted so as to be vertically movable with respect to the writing part 10 in engagement with both vertical end parts of the frame 20. The writing part 10 has a plurality of flat plates moving in rotation on a horizontal shaft X as shown in Figure 2, the surfaces of the flat plate presenting the writing surface. Namely, one writing surface is constructed by the writing surfaces 1A, 1A' provided by the two flat plates, and a plurality of writing surfaces of this type are prepared so as to be changeable with respect to one another.

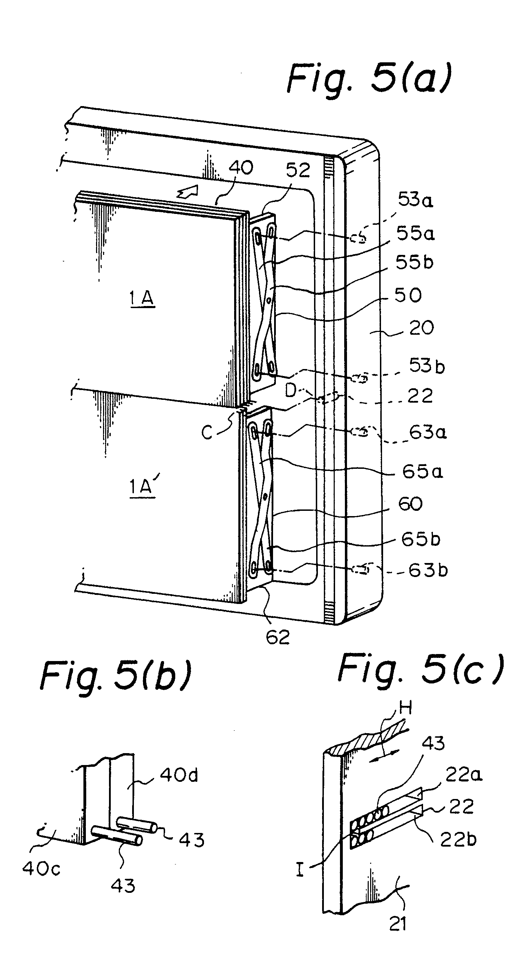

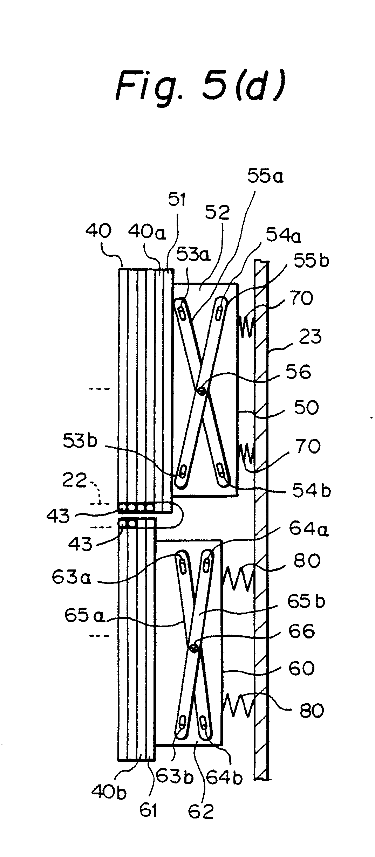

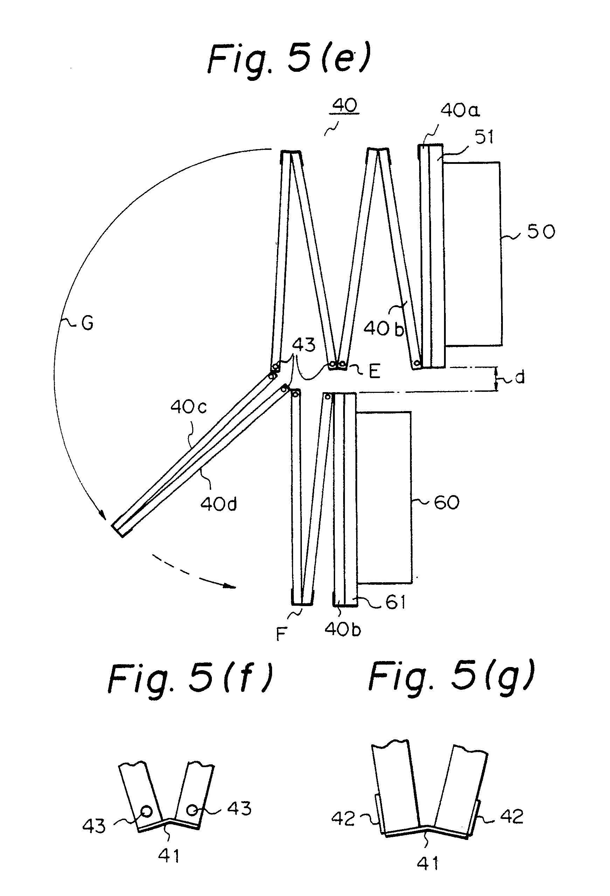

Details of the respective parts are as follows. The writing part 10 is arranged as shown in Figures 5(a) to 5(g). Although Figure 5 mainly illustrates the right side of Figure 1, the left side is also arranged in the same manner. Hereupon, Figure 5(a) is a view illustrating the relationship between the writing part 10 and the frame 20, Figures 5(b) and (c) are details showing the vicinities of points C and D in Figure 5(a), Figure 5(d) is a side view of the writing part illustrating a holder of the writing part (here, the flat plate is partly omitted), Figure 5(e) is a side view of the writing part illustrating a stacked flat plate part of the writing part, and Figures 5(f) and (g) are respectively details showing the vicinities of points E and F in Figure 5(e).

The writing part 10 mainly includes a stacked flat part 40 composed of a plurality of coupled flat plates and holders 50, 60 for supporting the stacked flat plate part 40. In the stacked flat plate part 40, the flat plates are held vertically in two stages in the frame 20 as shown in the figure. As shown in Figures 5(d) and (e), the upper stage flat plates 40a are fixedly mounted on a back plate 51 fixedly mounted on a side plate 52 of the holder 50. Likewise, the lower stage flat plates 40b are fixedly mounted on a back plate 61 fixedly mounted on a side plate 62 of the holder 60. End surfaces of the adjoining flat plates are joined with each other via a joining sheet 41 treated to be writable for sealing a gap (d) therebetween as shown in Figure 5(f). In particular, a writable sheet magnet 42 as shown in Figure 5(g) is provided on the end part of the flat plate moving in rotation in the arrow G direction shown in Figure 5(e). The magnet 42 magnetically couples the adjoining flat plates with each other when these plates are arranged as shown in Figure 5(d). Hereupon, although in the present embodiment the magnet is exposed directly on the plate surface, it may be buried in the plate and covered with a sheet. A horizontally extending cylindrical pivot 43 is provided through the side surface being the centre of rotational movement, shown by the arrow G, of each flat plate other than the flat plates 40a, 40b (Figures 5(b), (e)). The pivot 43 is engaged with a groove part 42 formed in the inner wall 21 of the frame 20 as shown in Figure 5 (c), and adapted to hold each flat plate such that the flat plate is parallely movable in the direction of arrow H. To be specific, the groove part 22 has two grooves 22a, 22b vertically in two stages, and the groove 22a houses the pivot 43 of the upper stage flat plate while the groove 22b houses the pivot 43 of the lower stage flat plate. In addition, gaps allowing the pivots 43 to pass therethrough are provided in end parts 1 of the grooves 22a, 22b on the writing surface side (on this side) for making the flat plate movable from the upper to the lower stage or reversely with the rotational motion of the flat plate shown in Figure 5(e). Moreover, the groove part 22 may have a single groove instead of the two grooves 22a, 22b. In addition, although in Figures 5(a) and (e), the distance between the upper and lower stage pivots is illustrated in exaggeration for simplification, it is actually very small.

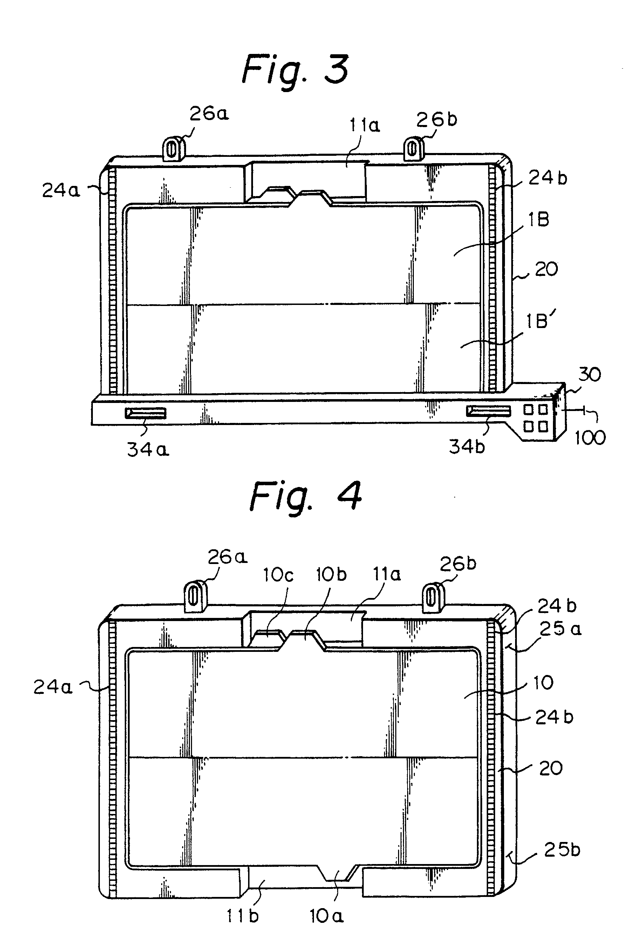

In the stacked flat plate part 40 arranged as described above, the upper stage flat plates are pushed against the writing surface by a spring 70 together with a holder 50 while the lower stage flat plates pushed against the writing surface by a spring 80 together with holder 60, as shown in Figure 5(d). The holder 50 includes a side plate 52, four pivots 53a, 53b, 54a, and 54b, two links 55a and 55b, and a pivot 56 for movably supporting these links 55a and 55b. The pivots 54a and 54b are fixedly mounted on the side plate 52 while the pivots 53a and 53b are fixedly mounted on the inner wall 21 of the frame 20 as shown in Figure 5-(a). In addition, the pivots 53a and 54b are respectively engaged with two elliptic holes in the link 55a while the pivots 53b and 54a are respectively engaged with two elliptic holes in the link 55b. Likewise, the holder 60 includes a side plate 62, four pivots 63a, 63b, 64a and 64b, two links 65a and 65b, and a pivot 66 for supporting these links, and the pivots 64a and 64b are fixedly mounted on the side plate 62 while the pivots 63a and 63b are fixedly mounted on the inner wall 21 of the frame 21. Moreover, the pivots 63a and 64b are respectively engaged with two elliptic holes in the link 65a while the pivots 63b and 64a are respectively engaged with two elliptic holes in the link 65b. Since the stacked flat plate part 40 is pushed by the springs 70 and 80, the pivots of these flat plates are arranged in order from the edge of the groove part 22 on the writing surface side (front side) thereof as shown in Figure 5(c). Namely, the upper and lower stage two flat plates on the front side (flat plate having writing surfaces 1A and 1A' in the example shown in Figure 2) are held flatwise and vertically by permitting the pivots 43 of these flat plates to make close contact with the edge of the groove part 22 for thereby forming one writing surface. Hereupon, in this situation, the adjoining flat plates are mutually coupled with the aid of the action of the sheet magnet 42 as described before. On the other hand, upon changing over one writing surface to another, a set of the flat plates 40c and 40d to be changed to each other are respectively rotated on the pivots 43 by permitting a writer to manually put them to this side in the arrow G direction, and hence changed over with ease as shown in Figure 5(e). Moreover, to promote this operation, hook parts 10a, 10b, and 10c as shown in Figure 4 are provided respectively on the respective flat plates. To house these hook parts, concave portions 11a and 11b are formed respectively in the upper and lower end parts of the frame 20. Moreover, a portion of each flat plate providing the writing surface is treated in its surface so as to permit any data to be writable thereon by means of aqueous felt tipped pen. Or, this can be achieved by sticking a writable sheet on the flat palte.

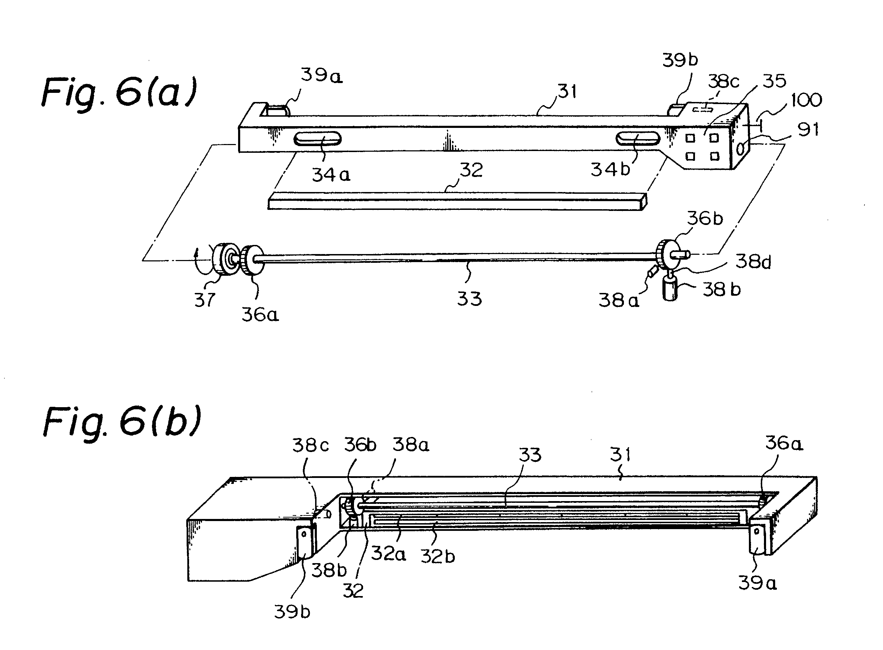

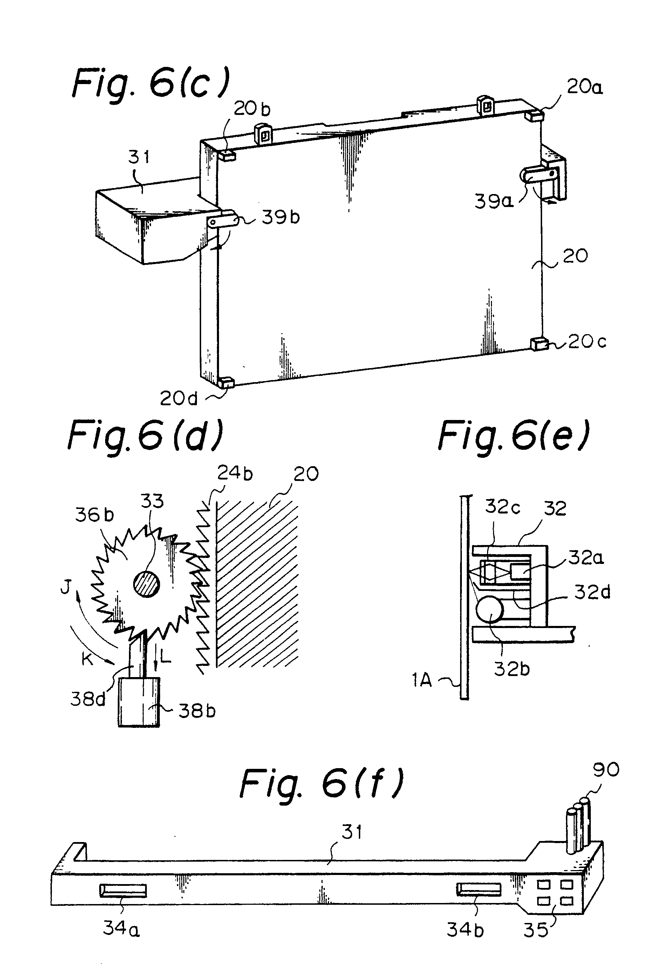

In succession, the arrangement of the scanning unit 30 will be described. Figure 6(a) is an exploded view illustrating a main protion of the scanning unit. Figure 6 (b) is a perspective view illustrating the scanning unit when viewed from the rear thereof. The scanning unit 30 includes, in a casing 31, a read unit 32 composed of a one-dimensional photoelectric conversion sensor 32a and a light source 32b a synchronization shaft 33, and electric control system (not shown) for processing an electric signal from the read part 32, and a chargeable battery (not shown). The casing 31 has handgrip holes 34a and 34b in the front part thereof, and has an operating part 35 including switches respectively for providing instructions such as "power on", "monitor on", "number of copies set", and "start". Gears 36a and 36b are respectively provided on both sides of the shaft 33. These gears are respectively engaged with rack teeth 24a and 24b vertically provided on the side front surface of the frame 20. A spiral spring 37 is attached to one end of the synchronization shaft 33, and the gears 36a and 36b provided on both sides of the synchronization shaft 33 bias the synchronization shaft 33 into engagement with the rack teeth 24a and 24b of the frame 20 so as to permit the scanning unit 30 to move upwardly on the frame 20, i.e., in the arrow direction of Figure 6(a). A timing sensor 38a is provided in the vicinity of the one gear 36b, which optically reads the rotating tooth face of the gear 36b for providing timing of read scanning. Moreover, a solenoid 38b is typically provided for preventing the gear 36b from being rotated by engaging a stopper 38d with the gear 36b tooth when the apparatus is not operated. In addition, a mark sensor 38c is provided in the casing 31 for optically reading an end mark 25a and a start mark 25b marked on the side of the frame 20 as shown in Figure 4. Furthermore, rotatable guide plates 39a, 39b are respectively provided on both ends of the casing 31 on the rear side thereof. These guide plates 39a, 39b make contact with the back surface of the frame 20 to hold the frame 20 between it and the casing 31 for thereby preventing the scanning unit 30 from being dismounted from the frame 20. These guide plates 39a, 39b are prevented upon the upward movement of the scanning unit 30 from slipping out upwardly from the frame 20 by striking projections 20a, 20b provided on both the upper ends of the frame 20. Moreover, these guide plates 39a, 39b are prevented upon the downward movement of the scanning unit 30 from moving further downwardly by striking projections 20c, 20d provided on both the lower ends of the frame 20. The scanning unit 30 can be easily demounted from the frame 20 by respectively rotating the guide plates 39a, 39b into the state shown in Figure 6(b). In addition, an antenna 100 is attached to the one side of the casing 31. The antenna 100 is to support the communication between the electric control system in the scanning unit 30 and a monitor printer described later via an electric wave. The scanning unit 30 arranged as such is located, in writing operation, upwardly of the frame 20 as shown in Figure 1. Namely, the scanning unit 30 is held at the upper position of the frame 20 since the gears 36a, 36b provided in the interior of the scanning unit are respectively engaged with the rack teeth 24a, 24b of the frame 20 and furthermore biased together with the synchronization shaft 33 by the spiral spring 37. On the other hand, in copying (monitoring) operation, a writer first inserts his fingers into the handgrip holes 34a, 34b against the bias of the spiral spring 37 to push down the scanning unit 30 and move it to a prescribed position (a position where the guide plates 39a, 39b of the scanning unit 30 respectively strike the projections 20c, 20d formed on both the lower ends of the frame 20 shown in Figure 6(c) located on the lower side of the frame 20. Hereupon, the gear 36b, the stopper 38d of the solenoid 38b, and the rack tooth 24b are respectively arranged as shown in Figure 6 (d). Namely, the stopper 38d is engaged with the tooth part of the gear 36b being ready to be rotated in the direction of arrow J owing to the bias of the spiral spring 37 provided on the tip end of the synchronization shaft 33, for preventing the gear 36b from being rotated. Thus, the scanning unit 30 is stopped at the position owing to the engagement of the gear 36b with the stopper 38d independently of the bias by the spiral ring 37. Thereupon, when the gear 36b is rotated in the direction of arrow K, the slanted portion of the gear 36b tooth is allowed to push against the slanted portion of the stopper 38d and hence the gear 36b is pushed in the direction of arrow L. Thus, the gear 36b becomes rotatable in the direction of arrow K irrespective of the engagement thereof with the stopper 38d. As a result, the gear 36b is not prevented by the stopper 38d from moving also upon moving the scanning unit 30 downwardly. In succession, the scanning unit 30 is moved on the frame 20 from the lower to upper side thereof by making use of the restoring force of the spiral spring 37 by energizing, in the state of the scanning unit 30 being positioned at the lower prescribed position, the solenoid 38b to move the stopper 38d in the direction of arrow L for releasing the engagement of the stopper 38d with the gear 36b. During this movement of the scanning unit 30, the writing surfaces 1A, 1A' are illuminated with light from the light source 32b housed in the read unit 32 as shown in Figure 6(e), and reflected light is focused onto the photoelectric conversion sensor 32a via a rod lens 32c to scan the writing surfaces 1A, 1A'. Hereupon, designated at 32d in the same figure is an optional shielding plate for blocking the light from the light source 32b so as to prevent the light from directly impinging on the photoelectric conversion sensor 32a. The scanning unit 30, after being moved to the upper side of the frame 20, finally returns to the original position shown in Figure 1. Furthermore, the scanning frame 30 may have an ink marker 90 as shown in Figure 6(f).

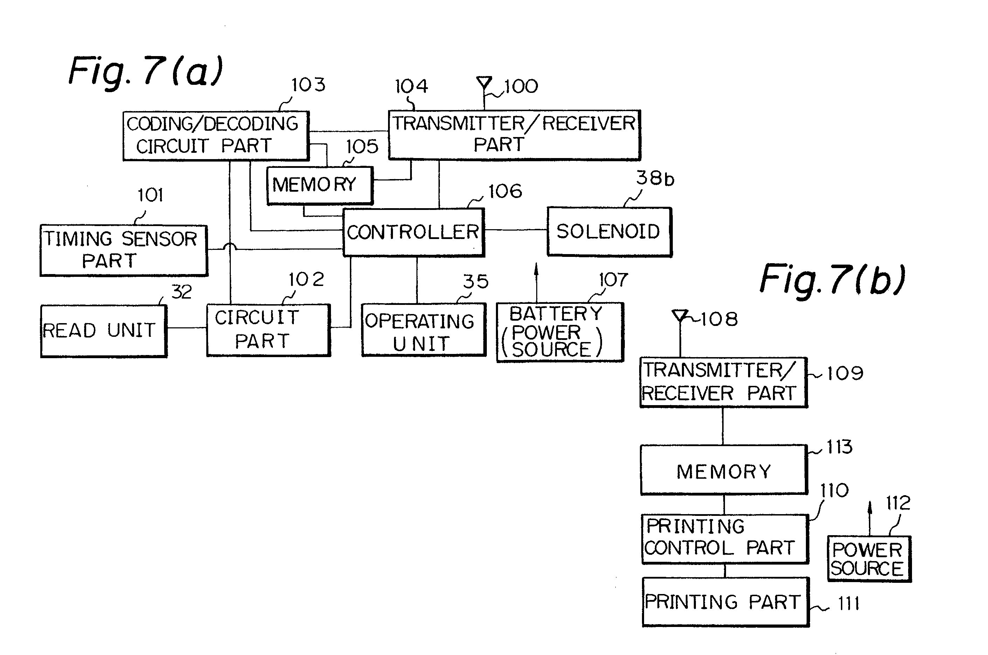

Successively, the electric control system disposed in the scanning unit 30 will be described with reference to Figure 7(a). As shown in the same figure (a), the numeral 101 is a timing sensor part composed of a timing sensor 38a and a mark sensor 38c shown in Figure 6(a). The numeral 102 is a circuit section for processing a read signal from the read part 32. The numeral 103 is a coding/decoding circuit part for coding a signal from the circuit section 102 while decoding a signal received from the monitor printer shown in Figure 7(b). The numeral 104 is a transmitter/receiver part for transmitting a signal to the monitor printer and receiving a signal therefrom. The numeral 105 is a memory for storing the signal concerned during a transmitting and receiving operation. The numeral 106 is a controller for controlling the respective illustrated parts. The numeral 107 is a battery power er source serving to supply power to each illustrated part and is chargeable by connection thereof to an external charging unit (not shown) via a charging terminal 91 shown in Figure 6(a).

Figure 7(b) is a block diagram illustrating the electric control system of the monitor printer. The monitor printer is housed as described before, in an independent casing different from the frame 20 shown in Figure 1. As shown in the same figure, designated at 108 is an antenna, 109 is a transmitter/receiver part for communicating with the electric control system of the scanning unit 30, 111 is a printing part, 110 is a printing controller for controlling the printing part 111, 112 is a commercial power source for supplying power to the respective part, and 113 is a memory for storing the signals concerned during a transmitting and receiving operation.

In succession, the method of operation of the present embodiment and operation thereof will be described. A blackboard unit according to the present invention is fixedly mounted on a wall by hooking suspension hooks 26a, 26b provided on the upper end of the frame 20 on hangar fittings 27a, 27b fixed on the wall as shown in Figure 1. The writing surface is assumed to be 1A, 1A' at first. The changeover of the writing surface from 1A, 1A' to 1B, 1B' can be achieved by pulling the hook part 10a to this side as shown in. Figure 2. This operation is as described previously. As a result, the writing surface changes to 1B, 1B' as shown in Figure 3. When after character data is written on the writing surface 1B, 1B', any copy of this surface is required, the scanning unit 30 is first pulled down from the state thereof of Figure 1 into the state of Figure 3 by inserting the operator's fingers into the handgrip holes 34a, 34b. Meanwhile, the gears 36a, 36b respectively engaged with the rack teeth 24a, 24b on the frame 20 are rotated to charge the spiral spring 37 disposed at the end of the synchronization shaft 33. Thereupon, the scanning unit 30 is kept in the state of Figure 3 by permitting the gear 36b to be locked by the solenoid 38b. Then, the switches "power on" being depressed, the power source for the electric control system in the scanning unit 30 is turned on, and with the switch "monitor on" being depressed, a signal is transmitted from the transmitter/receiver part 104 and antenna 100 in the scanning unit 30 to the antenna 108 and the transmitter/receiver part 109 in the monitor printer to turn the power source for the electric control system in the monitor printer on. In addition, with the switch "number of copies set" being depressed, the desired number of copies is designated. Although the switch "number of copies set" is arranged such that the number of times of successive depressions thereof corresponds to the number of copies, it is not limited thereto. Namely, this switch may be arranged such that the designation is effected by providing a plurality of switches as the "number of copies set" switch and selectively depressing a switch corresponding to the desired number of copies.

After confirming that the three switches on the operating part 35 have been depressed as described above, the switch "start" is finally depressed. In addition, these switches may be arranged such that lamps, etc., are provided in the interiors of the respective switches, any of which lamps is lighted corresponding to the switch being depressed for confirmation of the on-state of the switch. With this switch "start" being depressed, the control part 106 of Figure 7(a) actuates the solenoid 38b. With the lock being released, the gears 36a, 36b are rotated in the direction of arrow J of Figure 6(d) in engagement with the rack teeth 24a, 24b on the frame 20 by making use of the restoring force of the charged spiral spring 37 for thereby pulling the scanning unit 30 upwardly. When the read operation of the timing sensor part 101 is started by depressing the "start" switch for pulling the scanning unit 30 upwardly, the mark sensor 38c shown in Figure 6(c) reads the start mark 25b shown in Figure 1, whereby the read part 32 starts to read the writing surface. The read part 32 optically scans the writing surfaces 1B, 1B' with use of the photoelectric conversion sensor 32a, etc., while taking timing on the basis of an electric signal from the timing sensor 38a which optically reads the tooth face of the gear 36b. The electric signal from the read part 32 is properly processed in the circuit part 102 of Figure 7(a) and coded in the coding/decoding circuit part 103, and thereafter transmitted to the monitor printer part shown in Figure 7(b) via the transmitter/receiver part 104 and the antenna 100. Any image information transmitted from the scanning unit 30 via the antenna 108 and the transmitter/receiver part 109 is received by the monitor printer part and stored in the memory 113, and thereafter printed by the printing part 111 under the control of the printing control part 110. When the mark sensor 38c detects the end mark 25a, the control part 106 shown in Figure 7(a) interrupts the actuation of the solenoid 38b to lock the gear 36b for thereby stopping the upward movement of the scanning frame 30. Moreover, the designation of the number of copies by depression of the "number of copies set" switch is transmitted to the transmitter/receiver part 109 of the monitor printer likewise to the transmission of the image information. Hereby, the printing control part 110 reads the image information from the memory 113 based on the number-of-copies information, and controls the printing part 111 to effect printing corresponding to the designated number of copies.

The present invention permits various modifications without being limited to the embodiment described above. For example, the embodiment described above is adapted to profitably employ the restoring force of the spiral spring 37 for the movement of the scanning unit 30, but it may be adapted to move the scanning unit directly manually or to move the same electrically with use of a motor. In addition, although the above embodiment was adapted to have the writing surface composed of a couple of flat plates, e.g., 40c and 40d, joined at the point F, and to rotate and move these two flat plates in the direction of arrow G upon changing the writing surface, it may of course be arranged to independently form the respective flat plates without joining them at the point F and treat both the face and back surfaces of the flat plate to be writable, and thereafter rotate and move the single flat plate so treated in the direction of arrow G. Furthermore, although the embodiment has the stacked flat plate parts 40 on the upper and lower parts of frame 20, and rotates and move those flat plates vertically, it may be arranged to have the stacker flat plates on the right and left sides of the frame, and rotate and move those flat plates to the right and left to change over the writing surface.

## Claims

1. An electronic print board apparatus comprising:

   (a) a writing part (10) having a writable/erasable writing surface (A), (A');
   (b) a frame part (20) for housing and supporting said writing part (10);
   (c) a scanning part supported movably on said frame part (20) for optically scanning said writing surface (1A), (1A') in prescribed direction and for thereby generating an electric signal representative of read information;
   (d) a printing part (111) for printing the read information onto a recording medium in conformity with said electric signal;
   (e) said writing part (10) being arranged by stacking writable flat plates respectively into two sections yielded by halving the interior of said frame part (20);
   (f) said plurality of writing surfaces (1A), (1A') being composed of a pluralty of writable flat plates in the form of a stack constrained to move from one said section to the other;
   (g) said plurality of flat plates being rotated, when respectively located on the front row of said two sections, around a boundary line dividing said two sections to thereby move from one section to the other of said two sections; and
   (h) said exposed writing surfaces being constituted by the exposed surfaces of a respective pair of said flat plates each one of which being located at the front position of a respective one of said sections.

2. An electronic print board apparatus according to claim 1, wherein said plurality of flat plates are arranged to be movable from this side to the interior or reversely thereof in the frame part.

3. An electronic print board apparatus according to claim 2, wherein said electronic print board apparatus has biassing means for moving said plurality of flat plates from the interior to this side in the frame part (22).

4. An electronic print board apparatus according to claim 1, wherein each of said plurality of flat plates is adapted to have a pivot engaged in a groove provided in the frame part, and rotated and moved around said pivot (43).

5. An electronic print board apparatus according to claim 1, wherein each of said plurality of flat plates has a magnet (42) for joining adjoining flat plates with each other.

6. An electronic print board apparatus according to any one of the preceding claims wherein said scanning part includes:

   (A) an operating part (35) for providing a prescribed designation;
   (a) drive means for moving said scanning part on the writing surface (1A), (1A') in a prescribed direction;
   (C) a read part (32) composed of a light source (32b) for illuminating the writing surface (1A), (1A') with light and a sensor (32a) for converting reflected light from the writing surface to an electric signal;

(D) synchronization means for synchronizing the scanning of the writing surface by said read part (32) with the moving speed of the scanning part;

(E) a battery (101) for supplying power to the respective parts in the scanning part.

7. An electronic print board apparatus according to claim 6, wherein said drive means for moving the scanning part on the writing surface (1A), (1A') in a prescribed direction includes gears (36a), (36b) rotating in engagement with rack teeth (24a), (24b) provided on the frame (20) toward said prescribed direction, and a power source for driving and rotating said gear to move the scanning part in said prescribed direction.

8. An electronic print board apparatus according to claim 7, wherein said power source for rotating said gears (36a), (36b) is a spiral spring (37) wound when manually moving said scanning part in the opposite direction to said prescribed direction to said prescribed direction.

9. An electronic print board apparatus according to claim 8, wherein said electronic print board apparatus includes rotation lock releasing means for engaging with the gears (36b) rotated by making use of the restoring force of said spiral spring (37) to prevent it from being rotated, and releasing said engagement with the gears (36b) to rotate said gears.

10. An electronic print board apparatus according to claim 7, wherein said electronic print board apparatus optically reads the tooth faces of said rotating gears (36b) upon the movement of the scanning part in the prescribed direction, and synchronizes the scanning of the writing surface by said read part (32) with the moving speed of the scanning part on the basis of said read signal.

11. An electronic print board apparatus according to claim 6, wherein said scanning part is detachable from the frame part (20).

12. An electronic print board apparatus according to claim 7 wherein said scanning part further includes transmitting means for transmitting the read information in said read part (32) by making use of radio; and wherein said printing part (111) includes receiving means for receiving the information transmitted from the scanning part.

**Revendications**

1. Appareil à tableau d'impression électronique comportant:

(a) une partie d'écriture (10) présentant plusieurs surfaces d'écriture (1A), (1A') pouvant être écrites/effacées;

(b) une partie de cadre (20) destinée a loger et supporter ladite partie d'écriture (10);

(c) une partie de balayage supportée de façon mobile sur ladite partie de cadre (20) pour balayer optiquement l'une, a découvert, desdites surfaces d'écriture (1A), (1A') dans une direction prescrite et pour générer ainsi un signal électrique d'une information lue;

(d) une partie d'impression (111) destinée à imprimer l'information lue sur le support d'enregistrement en conformité avec ledit signal électrique;

(e) ladite partie d'écriture (10) étant agencée par l'empilage de plaques planes pouvant être écrites, respectivement dans deux sections obtenues par division par moitié de l'intérieur de ladite partie de cadre (20);

(f) lesdites surfaces d'écriture (1A), (1A') étant composées de plusieurs plaques planes pouvant être écrites, sous la forme d'un empilage obligé à se déplacer de l'une desdites sections a l'autre;

(g) lesdites plaques planes pouvant être tournées, lorsqu'elles sont placées respectivement aux positions frontales desdites sections, autour d'une ligne de séparation divisant lesdites deux sections pour passer ainsi d'une section à l'autre desdites deux sections; et

(h) lesdites surfaces d'écriture à découvert étant constituées par les surfaces à découvert d'une paire respective desdites plaques planes dont chacune est placée dans la position frontale de l'une, respective, desdites sections.

2. Appareil à tableau d'impression électronique selon la revendication 1, dans lequel lesdites plaques planes sont agencées de façon a pouvoir être déplacées depuis ce côté vers l'intérieur ou inversement dans la partie de cadre.

3. Appareil à tableau d'impression électronique selon la revendication 2, dans lequel ledit appareil à tableau d'impression électronique comporte des moyens de rappel destinés à déplacer lesdites plaques planes de l'intérieur vers ce côté dans la partie de cadre (22).

4. Appareil à tableau d'impression électronique selon la revendication 1, dans lequel chacune desdites plaques planes est conçue de façon à avoir un pivot engagé dans une gorge prévue dans la partie de cadre, et est tournée et déplacée autour dudit pivot (43).

5. Appareil a tableau d'impression électronique selon la revendication 1, dans lequel chacune desdites plaques planes comporte un aimant (42) destiné a joindre entre elles des plaques planes contiguës.

6. Appareil à tableau d'impression électronique selon l'une quelconque des revendications précédentes, dans lequel ladite partie de balayage comprend:

   (A) une partie de commande (35) destinée à établir une désignation prescrite;
   (B) des moyens d'entraînement destinés à déplacer ladite partie de balayage sur la surface d'écriture (1A), (1A') dans une direction prescrite;
   (C) une partie de lecture (32) composée d'une source de lumière (32b) destinée à éclairer la surface d'écriture (1A), (1A') avec de la lumière et un capteur (32a) destiné à convertir en un signal électrique la lumière revenant par réflexion de la surface d'écriture;
   (D) des moyens de synchronisation destinés à synchroniser le balayage de la surface d'écriture par ladite partie de lecture (32) avec la vitesse de déplace ment de la partie de balayage;
   (E) une batterie (101) destinée à fournir de l'énergie aux parties respectives dans la partie de balayage.

7. Appareil à tableau d'impression électronique selon la revendication 6, dans lequel lesdits moyens d'entraînement destinés à déplacer la partie de balayage sur la surface d'écriture (1A), (1A') dans une direction prescrite comprennent des roues dentées (36a), (36b) tournant en prise avec des dents de crémaillère (24a), (24b) prévues sur le bâti (20) vers ladite direction prescrite, et une source d'énergie destinée à entraîner et faire tourner ladite roue dentée pour déplacer la partie de balayage dans ladite direction prescrite.

8. Appareil à tableau d'impression électronique selon la revendication 7, dans lequel ladite source d'énergie destinée à faire tourner lesdites roues dentées (36a), (36b) est un ressort spiral (37) enroulé lorsque l'on déplace manuellement ladite partie de balayage dans la direction opposée à ladite direction prescrite.

9. Appareil à tableau d'impression électronique selon la revendication 8, dans lequel ledit appareil à tableau d'impression électronique comprend des moyens de relâchement d'un verrou de rotation destinés à s'enclencher avec les roues dentées (36b) tournées par l'utilisation de la force de rappel dudit ressort spiral (37) afin de l'empêcher d'être tourné, et relâchant ledit enclenchement avec les roues dentées (36b) pour faire tourner lesdites roues dentées.

10. Appareil à tableau d'impression électronique selon la revendication 7, dans lequel ledit appareil à tableau d'impression électronique lit optiquement les faces des dents desdites roues dentées (36b) en rotation sous l'effet du mouvement de la partie de balayage dans la direction prescrite, et synchronise le balayage de la surface d'écriture par ladite partie de lecture (32) avec la vitesse de déplacement de la partie de balayage sur la base dudit signal lu.

11. Appareil à tableau d'impression électronique selon la revendication 6, dans lequel ladite partie de balayage peut être détachée de la partie de cadre (20).

12. Appareil à tableau d'impression électronique selon la revendication 7, dans lequel ladite partie de balayage comprend en outre des moyens de transmission destinés à transmettre par radio ladite information lue dans ladite partie de lecture (32); et dans lequel ladite partie d'impression (111) comprend des moyens de réception destinés à recevoir l'information transmise depuis la partie de balayage.

**Ansprüche**

1. Elektronische Kopiertafelvorrichtung, die umfaßt:
   (a) eine Schreibeinheit (10) mit einer Vielzahl von beschriftbaren/löschbaren Schreibflächen (1A), (1A');
   (b) ein Rahmenteil (20) zur Aufnahme und Lagerung der Schreibeinheit (10);
   (c) eine Abtasteinheit, die beweglich auf dem Rahmenteil (20) gelagert ist, zur optischen Abtastung derjenigen Schreibfläche (1A), (1A'), die belichtet ist, in einer vorgeschriebenen Richtung und zur Erzeugung eines elektrischen Signals, das Leseinformation darstellt, auf diese Weise;

(d) eine Druckeinheit (111) zum Drucken der Leseinformation auf ein Aufzeichnungsmedium gemäß dem elektrischen Signal;

(e) wobei die Schreibeinheit (10) dadurch gebildet wird, daß beschriftbare flache Platten jeweils in zwei Abschnitten gestapelt werden, die sich dadurch ergeben, daß das Innere des Rahmenteils (20) halbiert wird;

(f) wobei die Vielzahl von Schreibflächen (1A), (1A') aus einer Vielzahl von beschriftbaren flachen Platten in Form eines Stapels besteht, die in ihrer Bewegung von einem Abschnitt zum anderen eingeschränkt sind;

(g) wobei die Vielzahl von flachen Platten, wenn diese sich jeweils an der vordersten Stelle der Abschnitte befinden, um eine Grenzlinie, die die beiden Abschnitte teilt, drehbar ist, so daß sie von einem der beiden Abschnitte in den anderen gelangt; und

(h) wobei die belichteten Schreibflächen von den belichteten Oberflächen eines jeweiligen Paares der flachen Platten, von denen sich jede an der vordersten Stelle des jeweiligen Abschnittes befindet, gebildet werden.

2. Elektronische Kopiertafelvorrichtung nach Anspruch 1, worin die Vielzahl von flachen Platten so angeordnet ist, daß sie von dieser Seite in das Innere des Rahmenteils oder umgekehrt bewegt werden kann.

3. Elektronische Kopiertafelvorrichtung nach Anspruch 2, worin die elektronische Kopiertafelvorrichtung eine Einrichtung zur Erzeugung einer Vorspannung hat, mit deren Hilfe die Vielzahl von flachen Platten aus dem Inneren zu dieser Seite im Rahmenteil (22) bewegt wird.

4. Elektronische Kopiertafelvorrichtung nach Anspruch 1, worin jede der Vielzahl von flachen Platten einen Zapfen aufweist, der im Eingriff mit einer im Rahmenteil vorgesehenen Nut steht, und um den Zapfen (43) drehbar und bewegbar ist.

5. Elektronische Kopiertafelvorrichtung nach Anspruch 1, worin jede der Vielzahl von flachen Platten einen Magneten (42) zur Verbindung aneinander anliegender flacher Platten hat.

6. Elektronische Kopiertafelvorrichtung nach einem der vorhergehenden Ansprüche, worin die Abtasteinheit aufweist:

(A) eine Betriebseinheit (35) zur Bereitstellung einer vorgeschriebenen Bezeichnung;

(B) eine Antriebseinrichtung, mit deren Hilfe die Abtasteinheit auf der Schreibfläche (1A), (1A') in einer vorgeschriebenen Richtung bewegt wird;

(C) eine Leseeinheit (32), bestehend aus einer Lichtquelle (32b) zur Beleuchtung der Schreibfläche (1A), (1A') mit Licht und einem Sensor (32a) zur Umwandlung des reflektierten Lichts von der Schreibfläche in ein elektrisches Signal;

(D) eine Synchronisationseinrichtung zur Synchronisation des Abtastens der Schreibfläche durch die Leseeinheit (32) mit der Bewegungsgeschwindigkeit der Abtasteinheit;

(E) eine Batterie (101) zur Versorgung der jeweiligen Teile in der Abtasteinheit mit Strom.

7. Elektronische Kopiertafelvorrichtung nach Anspruch 6, worin die Antriebseinrichtung zur Bewegung der Abtasteinheit auf der Schreibfläche (1A), (1A') in einer vorgeschriebenen Richtung Zahnräder (36a), (36b) aufweist, die sich im Eingriff mit auf dem Rahmen (20) vorgesehenen Zahnstangen (24a), (24b) in die vorgeschriebene Richtung drehen, und eine Kraftquelle, die das Zahnrad antreibt und in Drehung versetzt, um die Abtasteinheit in die vorgeschriebene Richtung zu bewegen.

8. Elektronische Kopiertafelvorrichtung nach Anspruch 7, worin die Kraftquelle, die die Zahnräder (36a), (36b) in Drehung versetzt, eine Spiralfeder (37) ist, die aufgewickelt wird, wenn die Abtasteinheit manuell in die zur vorgeschriebenen Richtung entgegengesetzte Richtung bewegt wird.

9. Elektronische Kopiertafelvorrichtung nach Anspruch 8, worin die elektronische Kopiertafelvorrichtung eine Einrichtung zum Lösen der Rotationssperre aufweist, die mit den Zahnrädern (36b), die durch Ausnutzung der Rückstellkraft der Spiralfeder (37) in Drehung versetzt werden, in Eingriff gebracht wird, so daß verhindert wird, daß sie in Drehung versetzt werden, und bei der der Eingriff mit den Zahnrädern (36b) gelöst wird, um die Zahnräder zu drehen.

10. Elektronische Kopiertafelvorrichtung nach Anspruch 7, worin die elektronische Kopiertafelvorrichtung auf die Bewegung der Abtasteinheit in der vorgeschriebenen Richtung hin die Zahnoberflächen der sich drehenden Zahnräder (36b) optisch abliest und das Abtasten der Schreibfläche durch die Leseeinheit (32) mit der Bewegungsgeschwindigkeit der Abtasteinheit auf der Basis des Lesesignals synchronisiert.

11. Elektronische Kopiertafelvorrichtung nach Anspruch 6, worin die Abtasteinheit vom Rahmenteil (20) abnehmbar ist.

12. Elektronische Kopiertafelvorrichtung nach Anspruch 7, worin die Abtasteinheit weiterhin eine Übertragungseinrichtung zur Übertragung der Leseinformation in die Leseeinheit (32) mittels Funk aufweist, und worin die Druckeinheit (111) eine Empfangseinrichtung zum Empfangen der von der Abtasteinheit übertragenen Information aufweist.

# Fig. 1

# Fig. 2

## *Fig. 3*

## *Fig. 4*

# Fig. 5(a)

40 52

53a
55a
55b
50
20
53b
22
63a
65a
60
65b
63b

1A

1A'

D

C

62

# Fig. 5(b)

40d
43
43
40c
43

# Fig. 5(c)

H
43
22a
22
22b
I
21

# Fig. 5(d)

# Fig. 5(e)

# Fig. 5(f)

# Fig. 5(g)

Fig. 6(a)

Fig. 6(b)

# Fig. 6(c)

# Fig. 6(d)

# Fig. 6(e)

# Fig. 6(f)

## Fig. 7 (a)

CODING/DECODING CIRCUIT PART — 103

TRANSMITTER/RECEIVER PART — 104, 100

MEMORY — 105

TIMING SENSOR PART — 101

CONTROLLER — 106

SOLENOID — 38b

READ UNIT — 32

CIRCUIT PART — 102

OPERATING UNIT — 35

BATTERY (POWER SOURCE) — 107

## Fig. 7 (b)

TRANSMITTER/ RECEIVER PART — 108, 109

MEMORY — 113

PRINTING CONTROL PART — 110

POWER SOURCE — 112

PRINTING PART — 111

EP 0 231 646 B1